(19) Europäisches Patentamt
European Patent Office
Office européen des brevets

(11) **EP 3 213 957 A1**

(12) **EUROPEAN PATENT APPLICATION**

(43) Date of publication:
**06.09.2017 Bulletin 2017/36**

(51) Int Cl.:
**B60L 15/20** (2006.01)  **B60W 30/188** (2012.01)
**B60W 10/08** (2006.01)  **B60K 7/00** (2006.01)
**B60W 30/045** (2012.01)  **B60L 11/18** (2006.01)
**B60L 15/36** (2006.01)

(21) Application number: **17158697.7**

(22) Date of filing: **01.03.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **04.03.2016  JP 2016042509**

(71) Applicant: **JTEKT CORPORATION**
**Osaka-shi,**
**Osaka 542-8502 (JP)**

(72) Inventors:
• **ARIMA, Masanori**
**Osaka-shi, Osaka 542-8502 (JP)**
• **HASUDA, Yasuhiko**
**Osaka-shi, Osaka 542-8502 (JP)**

(74) Representative: **Winter, Brandl, Fürniss, Hübner, Röss, Kaiser, Polte - Partnerschaft mbB**
**Patent- und Rechtsanwaltskanzlei**
**Alois-Steinecker-Strasse 22**
**85354 Freising (DE)**

(54) **ELECTRIC VEHICLE**

(57)    A vehicle (1) includes front-wheels (3) each of which is driven by a front-wheel driving motor (15) having a first motor characteristic and a speed reducer (16), and rear wheels (4) each of which is driven by a rear-wheel driving motor (18) having a second motor characteristic. An ECU (7) calculates a total target wheel torque of all the wheels, and calculates target wheel torques for the respective front wheels and the respective rear wheels based on the total target wheel torque, the first motor characteristic, the second motor characteristic, and a characteristic of the speed reducer. The ECU calculates a target motor torque for the front-wheel driving motor based on a speed reduction ratio of the speed reducer and the target wheel torque for each front wheel, and calculates a target motor torque for the rear-wheel driving motor based on the target wheel torque for each rear wheel.

FIG. 1

EP 3 213 957 A1

**Description**

BACKGROUND OF THE INVENTION

1. Field of the Invention

The invention relates to a vehicle including motor-driven wheels.

2. Description of the Related Art

Japanese Patent Application Publication No. 2011-188557 (JP 2011-188557 A) describes a vehicle including wheels that include front wheels and rear wheels, front-wheel motors coupled directly to the front wheels, and rear-wheel motors coupled directly to the rear wheels. In the vehicle, a torque distribution ratio between the front wheels and the rear wheels is calculated such that the total efficiency of all the motors is maximized, and drive control of the front-wheel motors and the rear-wheel motors is executed based on the calculated torque distribution ratio.

The vehicle described in JP 2011-188557 A has a configuration to which a so-called direct drive mechanism is applied. Thus, in the vehicle described in JP 2011-188557 A, the front-wheel motors are coupled directly to the front wheels and the rear-wheel motors are coupled directly to the rear wheels. Therefore, the front-wheel motors and the rear-wheel motors are required to rotate at a rotation speed corresponding to an actual traveling speed of the vehicle, and are also required to generate a torque corresponding to the actual traveling speed of the vehicle. Thus, the front-wheel motors and the rear-wheel motors having substantially identical speed characteristics and substantially identical torque characteristics are used.

The front-wheel motors and the rear-wheel motors having substantially identical rotation speed characteristics and substantially identical torque characteristics also have substantially identical efficiency regions. The efficiency region is defined by the rotation speed and the torque. Thus, the high efficiency region of the front-wheel motors is located relatively close to the high efficiency region of the rear-wheel motors. Consequently, traveling conditions in which a power system exhibits high total efficiency are limited to a narrow range. This makes it difficult to appropriately enhance the total efficiency of the power system that drives the wheels.

SUMMARY OF THE INVENTION

One object of the invention is to provide a vehicle configured to enhance the total efficiency of a power system that drives wheels.

A vehicle according to an aspect of the invention includes: a pair of right and left first wheels and a pair of right and left second wheels; a first motor configured to rotationally drive each of the first wheels, the first motor having a first motor characteristic; a second motor configured to rotationally drive each of the second wheels, the second motor having a second motor characteristic that is different from the first motor characteristic; a speed reducer configured to amplify a torque generated by the first motor and to transmit the amplified torque to the first wheels; a total target wheel torque calculation unit configured to calculate a total target wheel torque that is a target value of a total wheel torque of all the wheels; a target wheel torque calculation unit configured to calculate a first target wheel torque that is a target value of a wheel torque required to be output from each of the first wheels and a second target wheel torque that is a target value of a wheel torque required to be output from each of the second wheels, based on the total target wheel torque, the first motor characteristic, the second motor characteristic, and a characteristic of the speed reducer; a first target motor torque calculation unit configured to calculate a first target motor torque that is a target value of a motor torque of the first motor, based on a speed reduction ratio of the speed reducer and the first target wheel torque; a second target motor torque calculation unit configured to calculate a second target motor torque that is a target value of a motor torque of the second motor, based on the second target wheel torque; and a motor driving control unit configured to execute drive control of the first motor based on the first target motor torque, and to execute drive control of the second motor based on the second target motor torque.

BRIEF DESCRIPTION OF THE DRAWINGS

The foregoing and further features and advantages of the invention will become apparent from the following description of example embodiments with reference to the accompanying drawings, wherein like numerals are used to represent like elements and wherein:

FIG. 1 is a plan view schematically illustrating a drive line of a vehicle according to an embodiment of the invention;
FIG. 2 is a sectional view schematically illustrating a front right wheel in FIG. 1;

FIG. 3 is a sectional view illustrating a rear right wheel in FIG. 1;
FIG. 4 is a map illustrating a first motor characteristic of a front-wheel driving motor in FIG. 1;
FIG. 5 is a map illustrating a second motor characteristic of a rear-wheel driving motor in FIG. 1;
FIG. 6 is a map illustrating a characteristic of a speed reducer in FIG. 1;
FIG. 7 is a map illustrating a totalized characteristic of the front-wheel driving motor and the speed reducer;
FIG. 8 is a map illustrating total efficiency of a power system;
FIG. 9 is a map illustrating a torque distribution ratio between the front wheels and the rear wheels;
FIG. 10A is a schematic diagram illustrating a manner of torque distribution based on a vehicle traveling condition;
FIG. 10B is a schematic diagram illustrating a manner of torque distribution based on a vehicle traveling condition;
FIG. 10C is a schematic diagram illustrating a manner of torque distribution based on a vehicle traveling condition;
FIG. 11 is a block diagram illustrating an example of a configuration of an electronic control unit (ECU); and
FIG. 12 is a flowchart illustrating control executed by a target motor torque calculation unit in FIG. 11.

DETAILED DESCRIPTION OF EMBODIMENTS

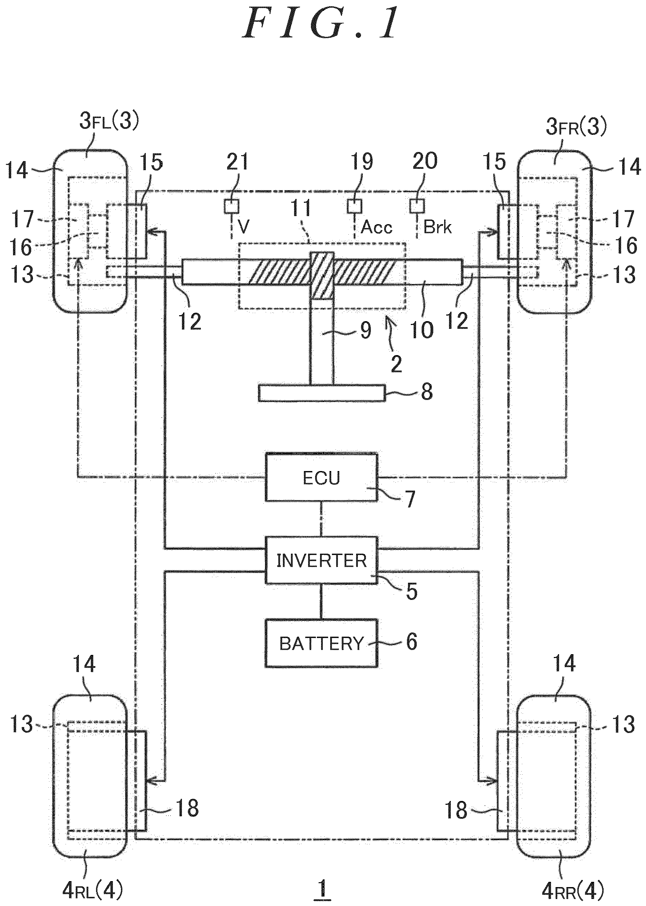

Hereinafter, embodiments of the invention will be described in detail with reference to the accompanying drawings. FIG. 1 is a plan view schematically illustrating a drive line of a vehicle 1 according to an embodiment of the invention. As illustrated in FIG. 1, the vehicle 1 is a four-wheel-drive vehicle, and the vehicle 1 includes a steering operation mechanism 2, a pair of front wheels 3, a pair of rear wheels 4, an inverter 5, a battery 6, and an electronic control unit (ECU) 7.

The steering operation mechanism 2 includes a steering wheel 8, a steering shaft 9, a rack shaft 10, a rack-and-pinion mechanism 11, and two tie rods 12. The steering shaft 9 rotates in response to a steering operation of the steering wheel 8. In the steering operation mechanism 2, the rack-and-pinion mechanism 11 converts the rotation of the steering shaft 9 into a reciprocating motion of the rack shaft 10. The front wheels 3 are coupled to the tie rods 12. With this configuration, the steered angle of the front wheels 3 is varied and the front wheels 3 are steered.

The front wheels 3 include a front right wheel $3_{FR}$ and a front left wheel $3_{FL}$. The rear wheels 4 include a rear right wheel $4_{RR}$ and a rear left wheel $4_{RL}$. Each of the front wheels 3 and the rear wheels 4 includes a wheel 13 and a tire 14. In the vehicle 1, the configuration on the front right wheel $3_{FR}$-side and the configuration on the front left wheel $3_{FL}$-side are substantially identical to each other. Therefore, the configuration on the front right wheel $3_{FR}$-side will be described by way of example, and components on the front left wheel $3_{FL}$-side will be denoted by the same reference numerals as those of the corresponding components on the front right wheel $3_{FR}$-side and description thereof will be omitted. Similarly, in the vehicle 1, the configuration on the rear right wheel $4_{RR}$-side and the configuration on the rear left wheel $4_{RL}$-side are substantially identical to each other. Therefore, the configuration on the rear right wheel $4_{RR}$-side will be described by way of example, and components on the rear left wheel $4_{RL}$-side will be denoted by the same reference numerals as those of the corresponding components on the rear right wheel $4_{RR}$-side and description thereof will be omitted.

The front right wheel $3_{FR}$ is rotationally driven by a front-wheel driving motor 15 (an example of "first motor") and a speed reducer 16. The front-wheel driving motor 15 is an in-wheel three-phase alternating-current (AC) electric motor (electric motor) incorporated in the wheel 13 of the front right wheel $3_{FR}$. The speed reducer 16 is incorporated in the wheel 13 of the front right wheel $3_{FR}$ along with the front-wheel driving motor 15. The speed reducer 16 reduces the speed of rotation output from the front-wheel driving motor 15 while amplifying the torque generated by the front-wheel driving motor 15, and then transmits the rotation having a reduced speed and the amplified torque to the front right wheel $3_{FR}$.

A clutch 17 is disposed between the front right wheel $3_{FR}$ and the speed reducer 16. The clutch 17 is configured to be switchable between an engaged state and a disengaged state. In the engaged state, the clutch 17 is engaged to permit transmission of a rotational driving force generated by the front-wheel driving motor 15 to the front right wheel $3_{FR}$. In the disengaged state, the clutch 17 is disengaged to prohibit transmission of a rotational driving force generated by the front-wheel driving motor 15 to the front right wheel $3_{FR}$. The clutch 17 is, for example, an electromagnetic clutch that is normally in the engaged state.

The rear right wheel $4_{RR}$ is rotationally driven by a rear-wheel driving motor 18 (an example of "second motor"). The rear-wheel driving motor 18 is an in-wheel three-phase alternating-current (AC) electric motor (electric motor) incorporated in the wheel 13 of the rear right wheel $4_{RR}$. The rear right wheel $4_{RR}$ has a configuration to which a so-called direct drive mechanism is applied, so that the rear right wheel $4_{RR}$ is rotationally driven directly by the rear-wheel driving motor 18. Thus, the rear right wheel $4_{RR}$ rotates at a rotation speed substantially equal to the rotation speed of the rear-wheel driving motor 18, and the rear right wheel $4_{RR}$ is driven based on a torque substantially equal to the torque generated by the rear-wheel driving motor 18.

The inverter 5 includes, for example, a three-phase inverter circuit, and is controlled by the ECU 7. The inverter 5 is configured to individually vary the manners of supplying electric power to the front-wheel driving motor 15 and the rear-wheel driving motor 18. The inverter 5 converts direct-current (DC) power supplied from the battery 6 into alternating-current (AC) power, and then supplies the AC power to the front-wheel driving motor 15. Thus, the front-wheel driving motor 15 is driven. When the clutch 17 is in the engaged state, the speed reducer 16 reduces the speed of rotation output from the front-wheel driving motor 15 while amplifying the torque generated by the front-wheel driving motor 15, and then transmits the rotation having a reduced speed and the amplified torque to the front right wheel $3_{FR}$. Thus, the front right wheel $3_{FR}$ is rotationally driven. On the other hand, when the clutch 17 is in the disengaged state, the rotational driving force generated by the front-wheel driving motor 15 is not transmitted to the front right wheel $3_{FR}$, so that the front right wheel $3_{FR}$ is not rotationally driven by the front-wheel driving motor 15.

Similarly, the inverter 5 converts DC power supplied from the battery 6 into AC power, and then supplies the AC power to the rear-wheel driving motor 18. Thus, the rear-wheel driving motor 18 is driven, so that the rear right wheel $4_{RR}$ is rotationally driven. The vehicle 1 further includes an accelerator sensor 19, a brake sensor 20, and a vehicle speed sensor 21. The accelerator sensor 19 detects a depression amount of an accelerator pedal (not illustrated). The brake sensor 20 detects a depression amount of a brake pedal (not illustrated). The vehicle speed sensor 21 detects a vehicle speed V of the vehicle 1. The accelerator sensor 19 outputs an accelerator depression amount signal Acc indicating the depression amount of the accelerator pedal (not illustrated). The brake sensor 20 outputs a brake signal Brk indicating the depression amount of the brake pedal (not illustrated). The vehicle speed sensor 21 outputs a vehicle speed signal indicating the present vehicle speed V of the vehicle 1.

The ECU 7 includes, for example, a microcomputer including a central processing unit (CPU) and memories (e.g., a read-only memory (ROM), a random-access memory (RAM), and a nonvolatile memory). The ECU 7 functions as a plurality of function processing units by executing prescribed programs. The ECU 7 is connected to, for example, the inverter 5, the clutch 17, the accelerator sensor 19, the brake sensor 20, and the vehicle speed sensor 21, all of which are controlled by the ECU 7.

Detection signals from the accelerator sensor 19, the brake sensor 20, and the vehicle speed sensor 21 are input into the ECU 7. The front-wheel driving motor 15, the rear-wheel driving motor 18, the inverter 5, and the clutch 17 are controlled based on, for example, the signals from the sensors. The ECU 7 is configured to variably control, via the inverter 5, the rotation speed of the front-wheel driving motor 15, the torque generated by the front-wheel driving motor 15, the rotation speed of the rear-wheel driving motor 18, and the torque generated by the rear-wheel driving motor 18.

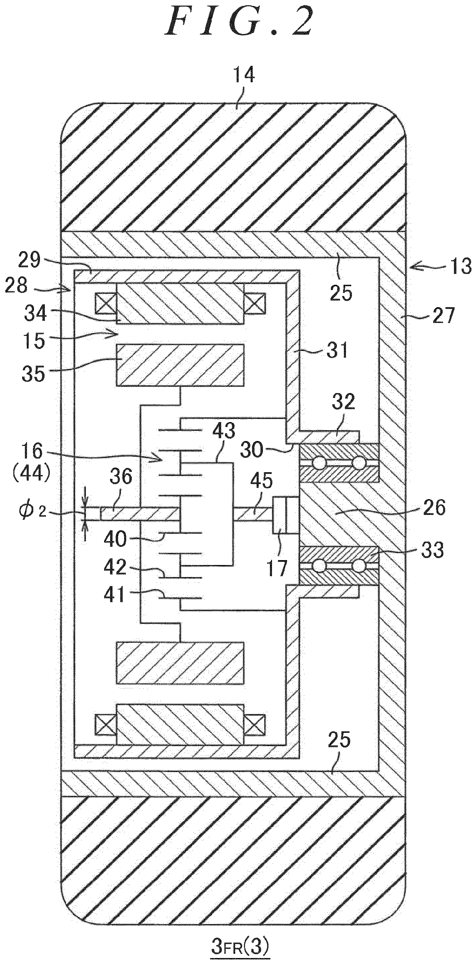

Next, with reference to FIG. 2, a configuration of the front right wheel $3_{FR}$ will be described in detail. FIG. 2 is a sectional view schematically illustrating the front right wheel $3_{FR}$ in FIG. 1. In the following description, an inward direction of the vehicle 1 will be referred to as "vehicle inward direction", and an outward direction of the vehicle 1 will be referred to as "vehicle outward direction". The front right wheel $3_{FR}$ includes the wheel 13 and the tire 14, as described above. The wheel 13 of the front right wheel $3_{FR}$ includes a first rim 25 and a first disc 27. The tire 14 is attached to the first rim 25. The first disc 27 is integral with the first rim 25. A front-wheel axle 26 is fitted integrally to a center portion of the first disc 27 in its radial direction. In the wheel 13, a wheel support 28 that supports the front right wheel $3_{FR}$ is disposed.

The wheel support 28 is non-rotatably supported by a vehicle body (not illustrated) via, for example, a suspension (not illustrated). The wheel support 28 includes a cylindrical portion 29 and an annular portion 31. The cylindrical portion 29 is disposed in the wheel 13 such that the central axis of the cylindrical portion 29 coincides with the front-wheel axle 26. The annular portion 31 is formed so as to substantially close an opening of the cylindrical portion 29, which opens in the vehicle outward direction. The annular portion 31 has an axle insertion hole 30. A cylindrical protruding portion 32 protruding in the vehicle outward direction is provided at a peripheral portion around the axle insertion hole 30 in the annular portion 31. The front-wheel axle 26 is disposed in the protruding portion 32. A bearing 33 is disposed between an inner peripheral surface of the protruding portion 32 and the front-wheel axle 26. The front right wheel $3_{FR}$ is rotatably supported by the wheel support 28 via the bearing 33.

The front-wheel driving motor 15 and the speed reducer 16 described above are disposed in the wheel support 28 (in the wheel 13). The front-wheel driving motor 15 includes a first stator 34, a first rotor 35, and a first motor shaft 36. The first stator 34 is fixed to an inner peripheral surface of the cylindrical portion 29. The first rotor 35 is disposed radially inward of the first stator 34. The first motor shaft 36 is fixed to the first rotor 35. In other words, the front-wheel driving motor 15 is an inner rotor motor. The first stator 34 is provided with stator windings including a U-phase winding, a V-phase winding, and a W-phase winding corresponding respectively to a U-phase, a V-phase, and a W-phase of the front-wheel driving motor 15.

The speed reducer 16 is a planetary gear mechanism 44 including a sun gear 40, a ring gear 41, a plurality of planet gears 42, and a carrier 43. The sun gear 40 is coupled to an end of the first motor shaft 36 in the vehicle outward direction. The sun gear 40 is rotationally driven by the front-wheel driving motor 15. The ring gear 41 has such a cylindrical shape that the periphery of the sun gear 40 is surrounded by the ring gear 41. The ring gear 41 is provided so as to be non-rotatable relative to the sun gear 40. The ring gear 41 may be fixed to the wheel support 28.

The planet gears 42 are disposed between the sun gear 40 and the ring gear 41 so as to be engaged with the sun gear 40 and the ring gear 41. The planet gears 42 turn around the sun gear 40 while rotating about their axes. The carrier 43 supports the planet gears 42, and includes a carrier shaft 45 that rotates as the planet gears 42 turn around the sun gear 40. The carrier 43 is coupled to the front-wheel axle 26 via the clutch 17 connected to the carrier shaft 45. A speed reduction ratio i of the speed reducer 16 is expressed by Relational Expression (1), where the number $Z_s$ of teeth of the sun gear 40 and the number $Z_r$ of teeth of the ring gear 41 are used.

$$i = (Z_r/Z_s) + 1 \qquad (1)$$

Next, description will be provided on the relationship between the torque and rotation speed of one front wheel 3 (the front right wheel $3_{FR}$, in an example in FIG. 2) and the torque and rotation speed of the front-wheel driving motor 15. The torque of one front wheel 3 is defined as a first wheel torque $T_{iwm1}$, and the rotation speed of one front wheel 3 is defined as a first wheel rotation speed $N_{iwm1}$. The torque of the front-wheel driving motor 15 is defined as a first motor torque $T_{m1}$, and the rotation speed of the front-wheel driving motor 15 is defined as a first motor rotation speed $N_{m1}$.

The first wheel torque $T_{iwm1}$ of one front wheel 3, the first wheel rotation speed $N_{iwm1}$ of one front wheel 3, the first motor torque $T_{m1}$ of the front-wheel driving motor 15, and the first motor rotation speed $N_{m1}$ of the front-wheel driving motor 15 are expressed by Relational Expressions (2), (3), where the speed reduction ratio i of the speed reducer 16 is used. The unit of rotation speed is "rpm", and the unit of torque is "N·m".

$$T_{iwm1} = i \times T_{m1} \qquad (2)$$

$$N_{iwm1} = N_{m1}/i \qquad (3)$$

When the front-wheel driving motor 15 is rotationally driven with the clutch 17 engaged, the first motor rotation speed $N_{m1}$ output from the front-wheel driving motor 15 is reduced by the speed reducer 16, and the first motor torque $T_{m1}$ generated by the front-wheel driving motor 15 is amplified by the speed reducer 16. The rotation having a reduced rotation speed and the amplified torque are transmitted to the front-wheel axle 26. Thus, the front wheel 3 is rotationally driven at the first wheel torque $T_{iwm1}$ (= i × $T_{m1}$) and the first wheel rotation speed $N_{iwm1}$ (= $N_{m1}$/i). When the front-wheel driving motor 15 is rotationally driven with the clutch 17 disengaged, the rotational driving force generated by the front-wheel driving motor 15 is not transmitted to the front-wheel axle 26. Consequently, the front wheel 3 is not rotationally driven by the front-wheel driving motor 15.

According to Relational Expressions (2), (3), for example, when the speed reduction ratio i of the speed reducer 16 is "10", a torque range of the first wheel torque $T_{iwm1}$ of one front wheel 3 is 10 times as large as a torque range of the first motor torque $T_{m1}$ of the front-wheel driving motor 15. Further, a rotation speed range of the first wheel rotation speed $N_{iwm1}$ of one front wheel 3 is one-tenth of a rotation speed range of the first motor rotation speed $N_{m1}$ of the front-wheel driving motor 15.

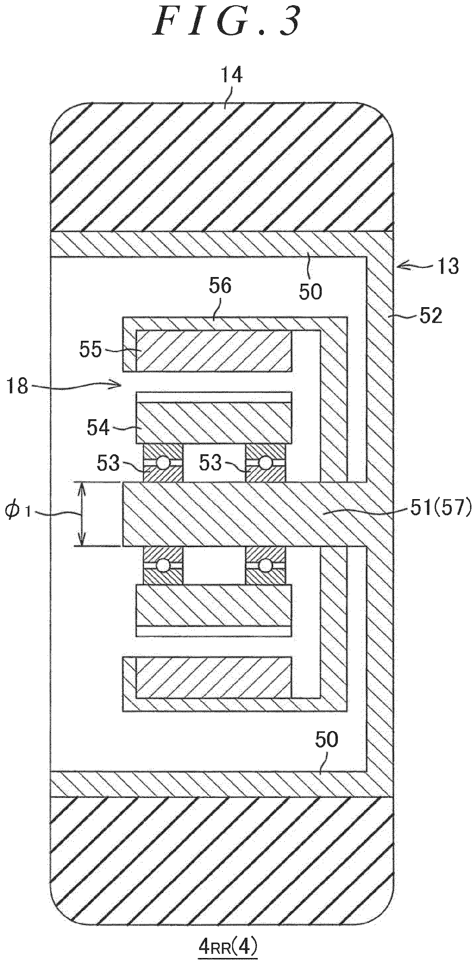

Next, with reference to FIG. 3, a configuration of the rear right wheel $4_{RR}$ will be described in detail. FIG. 3 is a sectional view schematically illustrating the rear right wheel $4_{RR}$ in FIG. 1. The rear right wheel $4_{RR}$ includes the wheel 13 and the tire 14, as described above. The wheel 13 of the rear right wheel $4_{RR}$ includes a second rim 50 and a second disc 52. The tire 14 is attached to the second rim 50. The second disc 52 is integral with the second rim 50. A rear-wheel axle 51 is fitted integrally to a center portion of the second disc 52 in its radial direction.

The rear-wheel driving motor 18 described above is disposed in the wheel 13. The rear-wheel driving motor 18 includes a second stator 54, a second rotor 55, a rotor case 56, and a second motor shaft 57. The second stator 54 is coupled to the rear-wheel axle 51 via a bearing 53 such that the second stator 54 is non-rotatable relative to the rear-wheel axle 51. The second rotor 55 is disposed radially outward of the second stator 54. The rotor case 56 supports the second rotor 55. The second motor shaft 57 is coupled to the second rotor 55 via the rotor case 56. In other words, the rear-wheel driving motor 18 is an outer rotor motor.

In the present embodiment, an example in which the second motor shaft 57 is integral with the rear-wheel axle 51 is described. However, the second motor shaft 57 may be a member produced separately from the rear-wheel axle 51, and may be coupled to the rear-wheel axle 51. The second stator 54 is non-rotatably supported by the vehicle body (not illustrated) via a suspension (not illustrated). The second stator 54 is provided with stator windings including a U-phase winding, a V-phase winding, and a W-phase winding corresponding respectively to a U-phase, a V-phase, and a W-phase of the rear-wheel driving motor 18.

The second motor shaft 57 of the rear-wheel driving motor 18 has a diameter $\varphi_1$ that is larger than a diameter $\varphi_2$ of the first motor shaft 36 of the front-wheel driving motor 15. The rear-wheel driving motor 18 is a high-torque motor that can generate a higher torque than the torque that can be generated by the front-wheel driving motor 15. Thus, a stress applied to the second motor shaft 57 (the rear-wheel axle 51) coupled to the rear-wheel driving motor 18, which is a high-torque motor, is higher than a stress applied to the first motor shaft 36 coupled to the front-wheel driving motor 15, which is a low-torque motor. Thus, in the present embodiment, the diameter $\varphi_1$ of the second motor shaft 57 of the rear-wheel driving motor 18 is set larger than the diameter $\varphi_2$ of the first motor shaft 36 of the front-wheel driving motor 15. Consequently, the second motor shaft 57 has an increased strength. As a result, a rotational driving force can be appropriately transmitted from the rear-wheel driving motor 18 to the rear right wheel $4_{RR}$.

Here, a torque of one rear wheel 4 (the rear right wheel $4_{RR}$, in an example in FIG. 3) is defined as a second wheel torque $T_{iwm2}$, a rotation speed of one rear wheel 4 is defined as a second wheel rotation speed $N_{iwm2}$, a torque of the rear-wheel driving motor 18 is defined as a second motor torque $T_{m2}$, and a rotation speed of the rear-wheel driving motor 18 is defined as a second motor rotation speed $N_{m2}$. The second wheel torque $T_{iwm2}$ of one rear wheel 4, the second wheel rotation speed $N_{iwm2}$ of one rear wheel 4, the second motor torque $T_{m2}$ of the rear-wheel driving motor 18, and the second motor rotation speed $N_{m2}$ of the rear-wheel driving motor 18 are expressed by Relational Expressions (4), (5). The unit of rotation speed is "rpm", and the unit of torque is "N·m".

$$T_{iwm2} = T_{m2} \qquad (4)$$

$$N_{iwm2} = N_{m2} \qquad (5)$$

According to Relational Expressions (4), (5), when the rear-wheel driving motor 18 is rotationally driven, the second motor rotation speed $N_{m2}$ output from the rear-wheel driving motor 18 and second motor torque $T_{m2}$ generated by the rear-wheel driving motor 18 are transmitted to the rear-wheel axle 51 without being changed. Thus, the rear right wheel $4_{RR}$ is rotationally driven at the second wheel rotation speed $N_{iwm2}$ (= $N_{m2}$) and the second wheel torque $T_{iwm2}$ (= $T_{m2}$) that are substantially equal to the second wheel rotation speed $N_{iwm2}$ and second motor torque $T_{m2}$ of the rear-wheel driving motor 18.

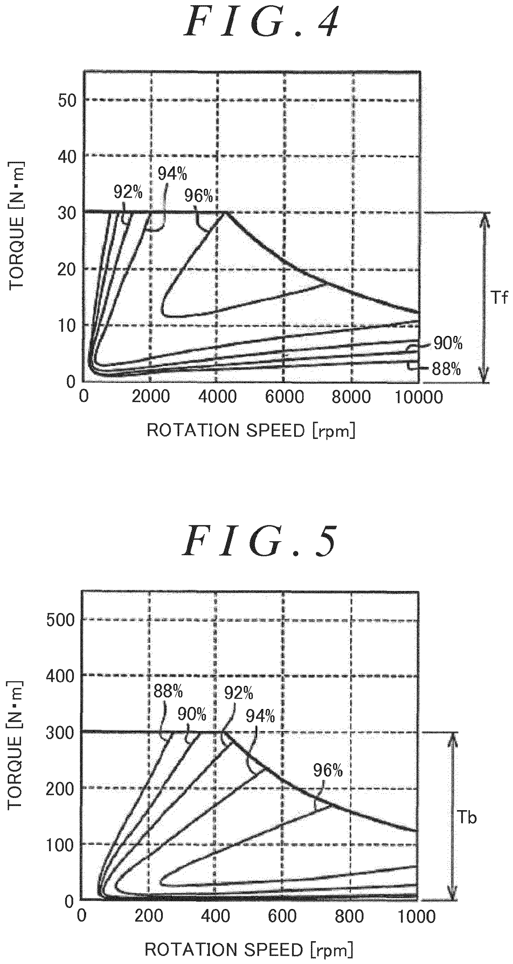

FIG. 4 is a map illustrating a first motor characteristic of the front-wheel driving motor 15 in FIG. 1. FIG. 5 is a map illustrating a second motor characteristic of the rear-wheel driving motor 18 in FIG. 1. In the following description of the present embodiment, the vehicle speed of the vehicle 1 when both the rotation speed of the front wheels 3 and the rotation speed of the rear wheels 4 are "1000 rpm" is defined as the maximum speed. As can be seen in FIG. 4, the first motor characteristic of the front-wheel driving motor 15 is, specifically, the unit efficiency of the front-wheel driving motor 15. As can be seen in FIG. 5, the second motor characteristic of the rear-wheel driving motor 18 is, specifically, the unit efficiency of the rear-wheel driving motor 18.

As can be seen in FIG. 4 and FIG. 5, the front-wheel driving motor 15 is a high-rotation-speed and low-torque motor that can rotate at a rotation speed higher than that of the rear-wheel driving motor 18 and that generates a torque lower than that generated by the rear-wheel driving motor 18. The rear-wheel driving motor 18 is a low-rotation-speed and high-torque motor that rotates at a rotation speed lower than that of the front-wheel driving motor 15 and that can generate a torque higher than that generated by the front-wheel driving motor 15. That is, the front-wheel driving motor 15 is higher in loss due to an iron loss and lower in loss due to a copper loss than the rear-wheel driving motor 18. On the other hand, the rear-wheel driving motor 18 is lower in loss due to an iron loss and higher in loss due to a copper loss than the front-wheel driving motor 15.

The front-wheel driving motor 15 is a "high-rotation-speed and low-torque motor". This means that a no-load rotation speed of the front-wheel driving motor 15 is higher than a no-load rotation speed of the rear-wheel driving motor 18 and a maximum torque $T_f$ of the front-wheel driving motor 15 is lower than a maximum torque $T_b$ of the rear-wheel driving motor 18. The rear-wheel driving motor 18 is a "low-rotation-speed and high-torque motor". This means that a no-load rotation speed of the rear-wheel driving motor 18 is lower than a no-load rotation speed of the front-wheel driving motor 15 and the maximum torque $T_b$ of the rear-wheel driving motor 18 is higher than the maximum torque $T_f$ of the front-wheel driving motor 15.

As can be seen in FIG. 4, in the front-wheel driving motor 15, a loss is high in a region where a high-rotation-speed range (for example, a range from 7000 rpm to 10000 rpm) and a low-torque range (for example, a range from 0 N·m to 10 N·m) are overlapped with each other. In the front-wheel driving motor 15, a loss is low in a region where a low-rotation-speed range (for example, a range from 1500 rpm to 5000 rpm) and a high-torque range (for example, a range from 20 N·m to 30 N·m) are overlapped with each other. In other words, the first motor characteristic of the front-wheel driving motor 15 has a high efficiency region in the low-rotation-speed and high-torque region. In FIG. 4, in a region where the efficiency is 88% or lower, the efficiency actually varies significantly so as to be reduced.

As can be seen in FIG. 5, in the rear-wheel driving motor 18, a loss is high in a region where a low-rotation-speed range (for example, a range from 0 rpm to 500 rpm) and a high-torque range (for example, a range from 150 N·m to 300 N·m) are overlapped with each other. In the rear-wheel driving motor 18, a loss is low in a region where a high-rotation-speed range (for example, a range from 500 rpm to 1000 rpm) and a low-torque range (for example, a range from 50 N·m to 150 N·m) are overlapped with each other. In other words, the second motor characteristic of the rear-wheel driving motor 18 has a high efficiency region in the high-rotation-speed and low-torque region. In FIG. 5, in a region where the efficiency is 88% or lower, the efficiency actually varies significantly so as to be reduced.

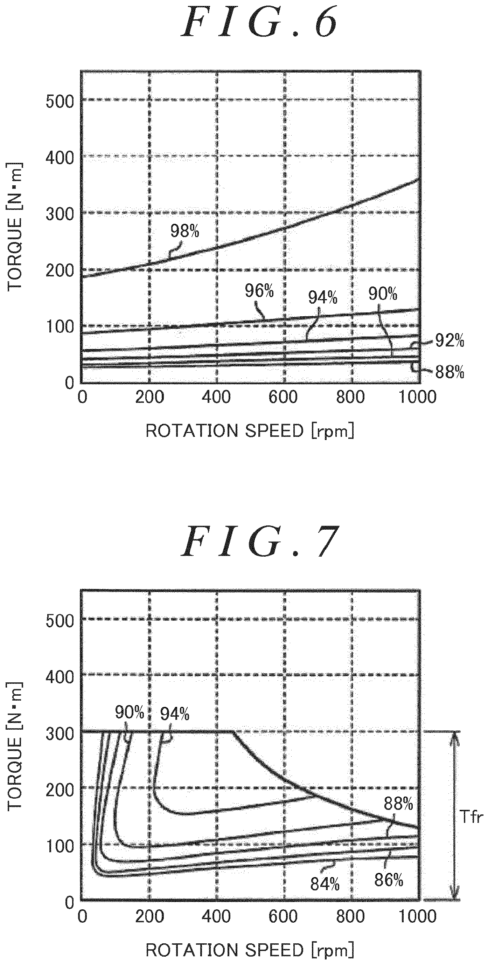

Next, with reference to FIG. 6 and FIG. 7, a characteristic of the speed reducer 16 will be described. FIG. 6 is a map illustrating the characteristic of the speed reducer 16 in FIG. 1. FIG. 7 is a map illustrating a totalized characteristic of the front-wheel driving motor 15 and the speed reducer 16 (hereinafter, simply referred to as "characteristic of the front-wheel driving motor 15 after speed reduction"). In FIG. 6, the abscissa axis represents the rotation speed after speed reduction, which is output from the speed reducer 16. In FIG. 6, the ordinate axis represents the torque after speed reduction, which is output from the speed reducer 16.

As can be seen in FIG. 6, the characteristic of the speed reducer 16 is, specifically, the unit efficiency of the speed reducer 16. As can be seen in FIG. 7, specifically, the characteristic of the front-wheel driving motor 15 after speed reduction is obtained by multiplying the first motor characteristic of the front-wheel driving motor 15 (see FIG. 4) by the characteristic of the speed reducer 16 (see FIG. 6). As can be seen in FIG. 6, the characteristic of the speed reducer 16 is not significantly varied by an increase and decrease in the rotation speed, and is significantly varied by an increase and decrease in the torque. A certain amount of drag torque is generated in the speed reducer 16, so that the ratio of the drag torque to the input torque, which is input into the speed reducer 16, increases with a decrease in the torque. Thus, the characteristic of the speed reducer 16 has a low efficiency region in a low-torque range (for example, a range of lower than 20 N·m), and has a high efficiency region in a high-torque range (for example, a range of 200 N·m and higher).

As can be seen in FIG. 7, in the present embodiment, the characteristic of the front-wheel driving motor 15 after speed reduction is set such that the speed reduction ratio i of the speed reducer 16 is set to "10". Thus, in the characteristic of the front-wheel driving motor 15 after speed reduction, the rotation speed range is one-tenth of the rotation speed range in the unit characteristic of the front-wheel driving motor 15, and the torque range is 10 times as large as the torque range in the unit characteristic of the front-wheel driving motor 15. In the present embodiment, the speed reduction ratio i of the speed reducer 16 is set such that the maximum torque $T_f$ (= 30N·m) of the front-wheel driving motor 15 becomes equal to the maximum torque $T_b$ (= 300 N·m) of the rear-wheel driving motor 18. Thus, the maximum torque $T_{fr}$ of the front-wheel driving motor 15 after speed reduction is set equal to the maximum torque $T_b$ (= 300 N·m) of the rear-wheel driving motor 18.

The rotation speed range and the torque range of the front-wheel driving motor 15 after speed reduction are set to be substantially identical to the rotation speed range (0 rpm to 1000 rpm) and the torque range (0 N·m to 300 N·m) of the rear-wheel driving motor 18. Thus, in the characteristic of the front-wheel driving motor 15 after speed reduction, the rotation speed range and the torque range are set substantially identical to the rotation speed range and the torque range of the rear-wheel driving motor 18.

As can be seen in FIG. 4 and FIG. 6, the high efficiency region (low-rotation-speed and high-torque region) in the first motor characteristic of the front-wheel driving motor 15 overlaps with the high efficiency region (high-torque range) in the characteristic of the speed reducer 16. Therefore, like the first motor characteristic of the front-wheel driving motor 15, the characteristic of the front-wheel driving motor 15 after speed reduction has a high efficiency region in the low-rotation-speed and high-torque region.

As can be seen in FIG. 5 and FIG. 7, the characteristic of the front-wheel driving motor 15 after speed reduction and the characteristic of the rear-wheel driving motor 18 have high efficiency regions in regions different from each other, and have low efficiency regions in regions different from each other. More specifically, the characteristic of the front-wheel driving motor 15 after speed reduction has a low efficiency region in a region where a certain rotation speed range (for example, a range from 500 rpm to 1000 rpm) and a certain torque range (for example, a range from 50 N·m to 150 N·m) are overlapped with each other. This means that the low efficiency region in the characteristic of the front-wheel driving motor 15 after speed reduction corresponds to the high efficiency region in the characteristic of the rear-wheel driving motor 18. On the other hand, the characteristic of the rear-wheel driving motor 18 has a low efficiency region in a region where a certain rotation speed range (for example, a range from 100 rpm to 500 rpm) and a certain torque range (for example, a range from 200 N·m to 300 N·m) are overlapped with each other. This means that the low efficiency region in the characteristic of the rear-wheel driving motor 18 corresponds to the high efficiency region in the characteristic of the front-wheel driving motor 15 after speed reduction.

As described above, in the present embodiment, the rotation speed range of the front-wheel driving motor 15 after speed reduction is set substantially identical to the rotation speed range of the rear-wheel driving motor 18 (a range from 0 rpm to 1000 rpm). The maximum rotation speed of the front-wheel driving motor 15 after speed reduction and the maximum rotation speed of the rear-wheel driving motor 18 are set to be a wheel rotation speed (1000 rpm) corresponding to the maximum speed of the vehicle 1 according to the present embodiment, the torque range of the front-wheel driving motor 15 after speed reduction is set substantially identical to the torque range of the rear-wheel driving motor 18 (a range from 0 N·m to 300 N·m). The maximum torque $T_{fr}$ of the front-wheel driving motor 15 after speed reduction is set substantially equal to the maximum torque $T_b$ of the rear-wheel driving motor 18 (300 N·m).

That is, in the vehicle 1 according to the present embodiment, the characteristic of the front-wheel driving motor 15 after speed reduction and the characteristic of the rear-wheel driving motor 18 have the high efficiency regions in different regions and have the low efficiency regions in different regions, although having the same rotation speed range and the same torque range. Therefore, there is no speed range in which only one of the wheels is non-rotatable. Thus, the flexibility of torque distribution is high, and the efficiency of torque distribution is also high.

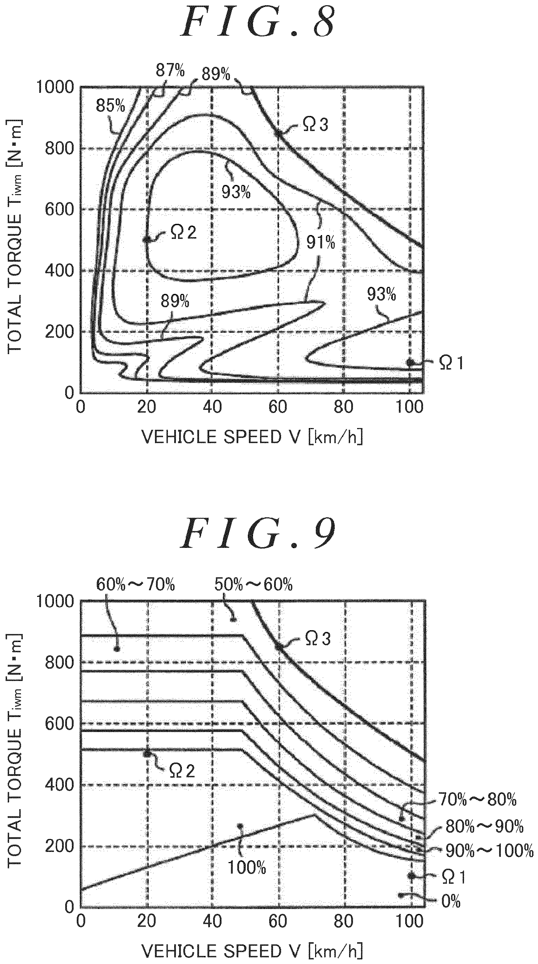

FIG. 8 is a map illustrating the total efficiency of a power system of the vehicle 1. FIG. 9 is a map illustrating torque distribution to the front wheels 3. In FIG. 8 and FIG. 9, the abscissa axis represents the vehicle speed V, and the ordinate axis represents a total wheel torque Tiwm of all the wheels (the front wheels 3 and the rear wheels 4). The maps in FIG. 8 and FIG. 9 are created based on the first motor characteristic of the front-wheel driving motor 15, the second motor characteristic of the rear-wheel driving motor 18, and the characteristic of the speed reducer 16 illustrated in FIGs. 4 to 7.

In FIG. 8, numerical values represented in percentage indicate the total efficiency of the power system of the vehicle 1. In FIG. 9, numerical values represented in percentage indicate the percentage of a portion of the total wheel torque Tiwm that is distributed to the front wheels 3, in other words, the ratio of the torque distributed to the front wheels 3 to the total wheel torque $T_{iwm}$. For example, when the percentage of a portion of the total wheel torque $T_{iwm}$ that is distributed to the front wheels 3 is "100%", in other words, when the ratio of the torque distributed to the front wheels 3 to the total wheel torque Tiwm is "1", the total wheel torque $T_{iwm}$ is output only from the front wheels 3. When the percentage of a portion of the total wheel torque $T_{iwm}$ that is distributed to the front wheels 3 is "50%", in other words, when the ratio of the torque distributed to the front wheels 3 to the total wheel torque $T_{iwm}$ is "0.5", half of the total wheel torque $T_{iwm}$ is output from the front wheels 3, and the other half of the total wheel torque Tiwm output from the rear wheels 4.

As illustrated in FIG. 9, in a region where a medium speed range (a range from 20 km/h to 60 km/h) and a medium torque range (a range from 400 N·m to 800 N·m) are overlapped with each other, the torque is distributed mainly to the front wheels 3, which exhibit high efficiency in this region. In a region where a high speed range (a range from 70 km/h to 100 km/h) and a low-torque range (a range from 100 N·m to 250 N·m) are overlapped with each other, the torque is distributed mainly to the rear wheels 4, which exhibit high efficiency in this region. Therefore, as illustrated in FIG. 8, a total efficiency $\eta_P$ of the power system of the vehicle 1 is high in the medium-speed and medium-torque region and in the high-speed and low-torque region.

The total efficiency of the power system of the vehicle 1 is the energy efficiency of the vehicle 1, and is obtained by dividing the motive power (vehicle driving force) transmitted to both the front wheels 3 and the rear wheels 4 by consumed electric power of the battery 6. The total efficiency of the power system is defined as a total efficiency $\eta_P$, the motive power transmitted to the front wheels 3 and the rear wheels 4 is defined as a vehicle driving force P, and the consumed electric power of the battery 6 is defined as a battery consumed electric power $P_{BAT}$. When an output from the front wheels 3 is defined as an output $P_F$ and an output from the rear wheels 4 is defined as an output $P_R$, the vehicle driving force P is expressed by Relational Expressions (6) to (8), using the first wheel torque $T_{iwm1}$ of one front wheel 3, the first wheel rotation speed $N_{iwm1}$ of one front wheel 3, the second wheel torque $T_{iwm2}$ of one rear wheel 4, and the second wheel rotation speed $N_{iwm2}$ of one rear wheel 4. The unit of rotation speed is "rpm", and the unit of torque is "N·m". The unit of vehicle driving force P, the output $P_F$ from the front wheels 3, and the output $P_R$ from the rear wheels 4 is "watt (W)".

$$P = P_F + P_R \qquad (6)$$

$$P_F = (2\pi/60) \times (N_{iwm1} \times T_{iwm1}) \times 2 \qquad (7)$$

$$P_R = (2\pi/60) \times (N_{iwm2} \times T_{iwm2}) \times 2 \qquad (8)$$

Relational Expression (7) is a calculating formula based on the assumption that the front right wheel $3_{FR}$ and the front left wheel $3_{FL}$ have substantially the same configuration and thus the output from the front right wheel $3_{FR}$ and the output from the front left wheel $3_{FL}$ are substantially equal to each other. When the output from the front right wheel $3_{FR}$ and the output from the front left wheel $3_{FL}$ are different from each other, the output from the front right wheel $3_{FR}$ and the output from the front left wheel $3_{FL}$ are individually calculated and then summed up to determine the output $P_F$ from the front wheels 3.

Similarly, Relational Expression (8) is a calculating formula based on the assumption that the rear right wheel $4_{RR}$ and the rear left wheel $4_{RL}$ have substantially the same configuration and thus the output from the rear right wheel $4_{RR}$ and the output from the rear left wheel $4_{RL}$ are substantially equal to each other. When the output from the rear right wheel $4_{RR}$ and the output from the rear left wheel $4_{RL}$ are different from each other, the output from the rear right wheel $4_{RR}$ and the output from the rear left wheel $4_{RL}$ are individually calculated and summed up to determine the output $P_R$ from the rear wheels 4.

The battery consumed electric power $P_{BAT}$ is expressed by Relational Expression (9), when an output current from the battery 6 is defined as an output current $I_{BAT}$ and an output voltage from the battery 6 is defined as an output voltage $V_{BAT}$. The unit of the output current $I_{BAT}$ is "ampere (A)", and the unit of the output voltage $V_{BAT}$ is "voltage (V)". The unit of the battery consumed electric power $P_{BAT}$ is "watt (W)".

$$P_{BAT} = I_{BAT} \times V_{BAT} \qquad (9)$$

The total efficiency $\eta_P$ is expressed by Relational Expression (10), where the vehicle driving force P and the battery consumed electric power $P_{BAT}$ are used. The unit of the total efficiency $\eta_P$ is "%".

$$\eta_P = (P/P_{BAT}) \operatorname{sign} (P_{BAT}) \times 100 \qquad (10)$$

In Relational Expression (10), sign ($P_{BAT}$) is a dimensionless number that is "1" when the electric power stored in the battery 6 is consumed to drive all of the front-wheel driving motors 15 and the rear-wheel driving motors 18, and that is "-1" when all of the front-wheel driving motors 15 and the rear-wheel driving motors 18 are driven to charge the battery 6 with the regenerated electric power.

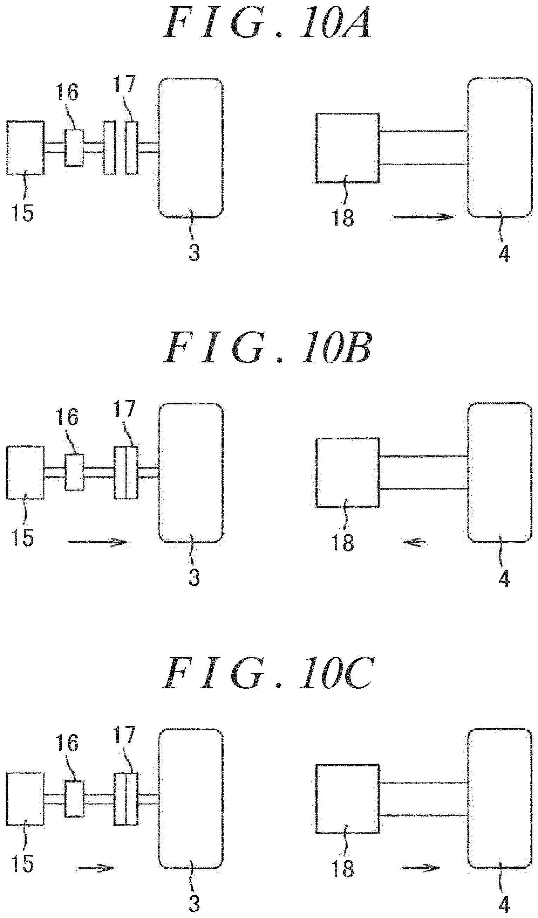

Next, with reference to FIG. 10A, FIG. 10B, and FIG. 10C in addition to FIG. 8 and FIG. 9, torque distribution based on specific traveling conditions of the vehicle 1 will be described. FIG. 10A, FIG. 10B, and FIG. 10C are each a schematic diagram illustrating a manner of torque distribution based on a traveling condition of the vehicle 1. The following description will be provided on the torque distribution at a first vehicle operation point $\Omega$1, a second vehicle operation point $\Omega$2, and a third vehicle operation point $\Omega$3 illustrated in the maps in FIG. 8 and FIG. 9. The first vehicle operation point $\Omega$1, the second vehicle operation point $\Omega$2, and the third vehicle operation point $\Omega$3 are points (V, $T_{iwm}$) determined by a vehicle speed V and the total wheel torque Tiwm at the vehicle speed V.

As can be seen in FIG. 8, at the first vehicle operation point $\Omega$1, (V, $T_{iwm}$) = (100 km/h, 100 N·m), which indicates a condition in which the vehicle 1 travels at a high speed and at a low torque. The total efficiency $\eta_P$ at the first vehicle operation point $\Omega$1 is 93%. At the second vehicle operation point $\Omega$2, (V, $T_{iwm}$) = (20 km/h, 500 N·m), which indicates a condition in which the vehicle 1 travels at a low speed and at a medium torque. The total efficiency $\eta_P$ at the second vehicle operation point $\Omega$2 is 93%. At the third vehicle operation point $\Omega$3, (V, Tiwm) = (60 km/h, 850 N·m), which indicates a condition in which the vehicle 1 travels at a high speed and at a high torque. The total efficiency $\eta_P$ at the third vehicle operation point $\Omega$3 is 89%.

As can be seen in FIG. 9, at the first vehicle operation point $\Omega$1, the entirety of the total wheel torque Tiwm (= 100 N·m) is distributed to the rear wheels 4. Therefore, the torque distributed to the front wheels 3 is zero, so that the front-wheel driving motors 15 are not driven. However, in actuality, at the first vehicle operation point $\Omega$1, the speed reducers 16 and the front-wheel driving motors 15 are rotated via the front wheels 3, which are rotated as the vehicle 1 travels. In this case, a portion of the torque output from the rear-wheel driving motors 18 is consumed in the rotation of the speed reducers 16 and the front-wheel driving motors 15, so that an energy loss occurs. Thus, in the present embodiment, when the rear-wheel driving motors 18 are driven and the front-wheel driving motors 15 are not driven, transmission of the torque to the speed reducers 16 and the front-wheel driving motors 15 via the front wheels 3 is prevented.

Specifically, as can be seen in FIG. 10A, at the first vehicle operation point $\Omega$1, the clutch 17 is disengaged to prevent the torque output from the rear-wheel driving motor 18, from being transmitted to the speed reducer 16 and the front-wheel driving motor 15 via the front wheel 3, which is rotated as the vehicle 1 travels. This reduces the occurrence of energy loss in the front-wheel driving motor 15 and the speed reducer 16. The rotational energy of the front-wheel driving motor 15 and the speed reducer 16, which are rotated via the front wheel 3, may be regenerated. However, in view of transmission efficiency, disengagement of the clutch 17 results in a lower total loss.

As can be seen in FIG. 9, at the second vehicle operation point $\Omega$2, the entirety of the total wheel torque Tiwm (= 500 N·m) is distributed to the front wheels 3. Therefore, that torque distributed to the rear wheels 4 is zero, so that the rear-wheel driving motors 18 are not driven. At the second vehicle operation point $\Omega$2, the entirety of the total wheel torque $T_{iwm}$ (= 500 N·m) is distributed to the front wheels 3. Thus, as can be seen in FIG. 10B, the clutch 17 is engaged, so that only the front-wheel driving motor 15 is driven. The rear-wheel driving motor 18 is rotated via the rear wheel 4, which is rotated as the vehicle 1 travels. The speed reducer 16 is not provided in the rear wheel 4, and an iron loss and a drag torque in the rear-wheel driving motor 18 are relatively low. Thus, a loss that occurs due to the rotation of the rear-wheel driving motor 18 is considerably low. At this time, the rear-wheel driving motor 18 may perform a regenerative operation using the rotational energy input into the rear-wheel driving motor 18 as indicated by an arrow in FIG. 10B.

As can be seen in FIG. 9, at the third vehicle operation point $\Omega 3$, 50% (= 425 N·m) of the total wheel torque Tiwm (= 850 N·m) is distributed to the front wheels 3, and 50% (= 425 N·m) of the total wheel torque $N_{iwm}$ (= 850 N·m) is distributed to the rear wheels 4. As can be seen in FIG. 10C, at the third vehicle operation point $\Omega 3$, both the front wheel 3 and the rear wheel 4 are driven. Thus, in the front wheel 3, the clutch 17 is engaged.

As described above, in the present embodiment, the front-wheel driving motor 15 and the rear-wheel driving motor 18, which have different high efficiency regions determined based on the rotation speed and the torque, are subjected to drive control based on the traveling condition of the vehicle 1. The torque distribution ratio between the front wheels 3 (the front-wheel driving motors 15 after speed reduction) and the rear wheels 4 (the rear-wheel driving motors 18) is varied depending on the traveling condition. Thus, the total efficiency $\eta_P$ of the power system can be maximized.

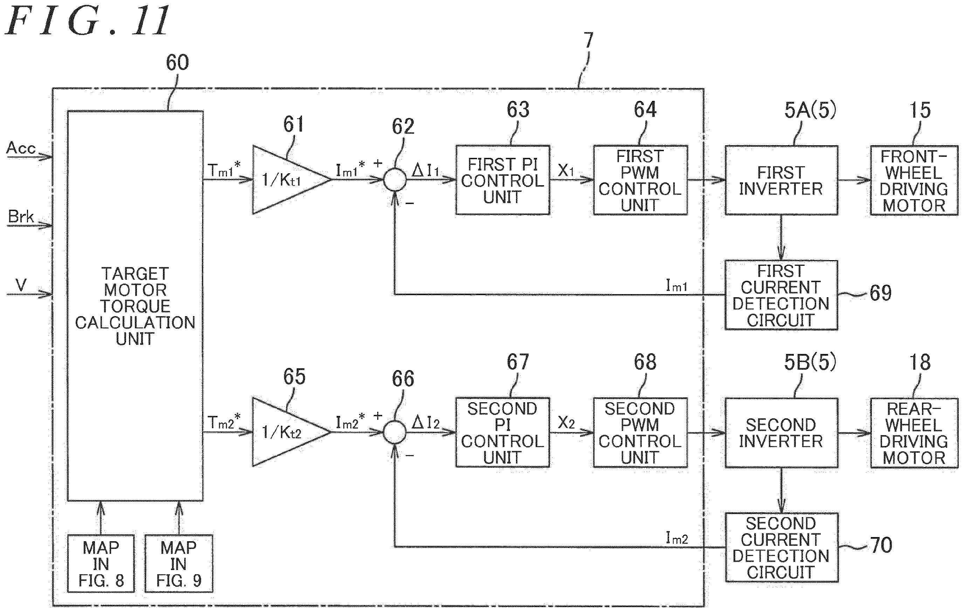

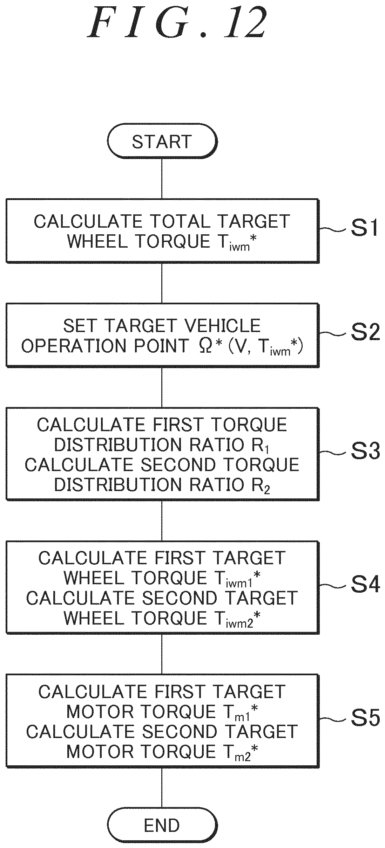

Next, with reference to FIG. 11 and FIG. 12, description will be provided on the control that is executed by the ECU 7 to maximize the total efficiency $\eta_P$ of the power system. FIG. 11 is a block diagram illustrating an example of a configuration of the ECU 7. In FIG. 11, for the sake of convenience, the inverter 5 is illustrated as two inverters, that is, a first inverter 5A and a second inverter 5B. The first inverter 5A is used to drive the front-wheel driving motors 15. The second inverter 5B is used to drive the rear-wheel driving motors 18.

As can be seen in FIG. 11, the ECU 7 includes a target motor torque calculation unit 60, a first target motor current calculation unit 61, a first deviation calculation unit 62, a first proportional integral (PI) control unit 63, a first pulse width modulation (PWM) control unit 64, a second target motor current calculation unit 65, a second deviation calculation unit 66, a second proportional integral (PI) control unit 67, and a second pulse width modulation (PWM) control unit 68. The first inverter 5A is connected to a first current detection circuit 69 configured to detect an actual first motor driving current $I_{m1}$ passing through the front-wheel driving motor 15. The second inverter 5B is connected to a second current detection circuit 70 configured to detect an actual second motor driving current $I_{m2}$ passing through the rear-wheel driving motor 18.

The target motor torque calculation unit 60 calculates a first target motor torque $T_{m1}^*$ and a second target motor torque $T_{m2}^*$. The first target motor torque $T_{m1}^*$ is a target value of the motor torque of the front-wheel driving motor 15. The second target motor torque $T_{m2}^*$ is a target value of the motor torque of the rear-wheel driving motor 18. With reference to FIG. 12, an example of calculation of the first target motor torque $T_{m1}^*$ and the second target motor torque $T_{m2}^*$ will be described. FIG. 12 is a flowchart illustrating control executed by the target motor torque calculation unit 60 in FIG. 11.

As can be seen in FIG. 12, the target motor torque calculation unit 60 first calculates a total target wheel torque $T_{iwm}^*$ that is a target value of the total wheel torque $T_{iwm}$ of all the wheels (step S1). The total target wheel torque $T_{iwm}^*$ is calculated based on an accelerator depression amount signal Acc from the accelerator sensor 19, a brake signal Brk from the brake sensor 20, a vehicle speed signal (i.e., a present vehicle speed V) from the vehicle speed sensor 21, and the map in FIG. 8.

Then, the target motor torque calculation unit 60 sets a vehicle operation point $\Omega^*$ (V, $T_{iwm}^*$) based on the present vehicle speed V and the calculated total target wheel torque $T_{iwm}^*$ (step S2). Then, based on the set vehicle operation point $\Omega^*$ (V, $T_{iwm}^*$) and the map in FIG. 9, the target motor torque calculation unit 60 calculates a first torque distribution ratio $R_1$ and a second torque distribution ratio $R_2$ (step S3). The first torque distribution ratio $R_1$ is a ratio of a portion of the total target wheel torque $T_{iwm}^*$ that is distributed to the front wheels 3, to the total target wheel torque $T_{iwm}^*$. The second torque distribution ratio $R_2$ is a ratio of a portion of the total target wheel torque $T_{iwm}^*$ that is distributed to the rear wheels 4, to the total target wheel torque $T_{iwm}^*$.

Then, based on the total target wheel torque $T_{iwm}^*$, the first torque distribution ratio $R_1$, and the second torque distribution ratio $R_2$, the target motor torque calculation unit 60 calculates a first target wheel torque $T_{iwm1}^*$ and a second target wheel torque $T_{iwm2}^*$ (step S4). The first target wheel torque $T_{iwm1}^*$ is a target value of the wheel torque that is required to be output from one front wheel 3. The second target wheel torque $T_{iwm2}^*$ is a target value of the wheel torque that is required to be output from one rear wheel 4. The first target wheel torque $T_{iwm1}^*$ and the second target wheel torque $T_{iwm2}^*$ are determined according to Relational Expressions (11), (12).

$$T_{iwm1}^* = (T_{iwm}^*/2) \times R_1 \qquad (11)$$

$$T_{iwm2}{}^* = (T_{iwm}{}^*/2) \times R_2 \qquad (12)$$

Next, based on the first target wheel torque $T_{iwm1}{}^*$ and the second target wheel torque $T_{iwm2}{}^*$, the target motor torque calculation unit 60 calculates a first target motor torque $T_{m1}{}^*$ and a second target motor torque $T_{m2}{}^*$ (step S5). The first target motor torque $T_{m1}{}^*$ is a target value of the motor torque of the front-wheel driving motor 15. The second target motor torque $T_{m2}{}^*$ is a target value of the motor torque of the rear-wheel driving motor 18.

The first target motor torque $T_{m1}{}^*$ and the second target motor torque $T_{m2}{}^*$ are determined according to Relational Expressions (13) to (15), using a torque amplification factor $\alpha$, the speed reduction ratio i of the speed reducer 16, and a forward efficiency $\eta$ of the speed reducer 16. The torque amplification factor $\alpha$, the speed reduction ratio i of the speed reducer 16, and the forward efficiency $\eta$ of the speed reducer 16 are prescribed values determined based on the specifications of the speed reducer 16.

$$\alpha = i \times \eta \qquad (13)$$

$$T_{m1}{}^* = T_{iwm1}{}^*/\alpha = T_{iwm1}{}^*/(i \times \eta) \qquad (14)$$

$$T_{m2}{}^* = T_{iwm2}{}^* \qquad (15)$$

As described above, the first target motor torque $T_{m1}{}^*$ and the second target motor torque $T_{m2}{}^*$ are calculated by the target motor torque calculation unit 60. The first target motor torque $T_{m1}{}^*$ calculated by the target motor torque calculation unit 60 is supplied to the first target motor current calculation unit 61. The second target motor torque $T_{m2}{}^*$ calculated by the target motor torque calculation unit 60 is supplied to the second target motor current calculation unit 65.

The first target motor current calculation unit 61 multiplies the first target motor torque $T_{m1}{}^*$ by the reciprocal ($= 1/K_{t1}$) of a first torque constant $K_{t1}$ of the front-wheel driving motor 15. In this way, the first target motor current calculation unit 61 calculates a first target motor driving current $I_{m1}{}^*$ ($= T_{m1}{}^*/K_{t1}$) that is a target value of a motor driving current for driving the front-wheel driving motor 15. The first target motor driving current $I_{m1}{}^*$ calculated by the first target motor current calculation unit 61 is output to the first deviation calculation unit 62.

The first deviation calculation unit 62 calculates a first current deviation $\Delta I_1$ ($= I_{m1}{}^* - I_{m1}$) between the first target motor driving current $I_{m1}{}^*$ and the first motor driving current $I_{m1}$. The first target motor driving current $I_{m1}{}^*$ is calculated by the first target motor current calculation unit 61. The first motor driving current $I_{m1}$ is detected by the first current detection circuit 69. The first current deviation $\Delta I_1$ calculated by the first deviation calculation unit 62 is output to the first PI control unit 63. The first PI control unit 63 executes PI calculation on the first current deviation $\Delta I_1$ calculated by the first deviation calculation unit 62. Consequently, a first driving command value $X_1$ is generated. The first driving command value $X_1$ is used to adjust the first motor driving current $I_{m1}$ passing through the front-wheel driving motor 15, to the first target motor driving current $I_{m1}{}^*$. The first driving command value $X_1$ generated by the first PI control unit 63 is input into the first PWM control unit 64.

The first PWM control unit 64 generates a PWM control signal with a duty ratio corresponding to the first driving command value $X_1$ generated by the first PI control unit 63, and supplies the PWM control signal to the first inverter 5A. Thus, the front-wheel driving motor 15 is supplied with electric power corresponding to the first driving command value $X_1$. The first deviation calculation unit 62 and the first PI control unit 63 constitute a current feedback control unit. Through the operation of the current feedback control unit, the first motor driving current $I_{m1}$ passing through the front-wheel driving motor 15 is controlled so as to approach the first target motor driving current $I_{m1}{}^*$ calculated by the first target motor current calculation unit 61.

Thus, the drive control of the front-wheel driving motor 15 is executed based on an actual first motor torque $T_{m1}$ ($= T_{iwm1}/(i \times \eta)$) corresponding to the first target motor torque $T_{m1}{}^*$ ($= T_{iwm1}{}^*/(i \times \eta)$). Consequently, the drive control of the front wheel 3 is executed based on a first wheel torque $T_{iwm1}$ ($= (i \times \eta) \times T_{m1}$) corresponding to the first target wheel torque $T_{iwm1}{}^*$ ($= (i \times \eta) \times T_{m1}{}^*$).

The second target motor current calculation unit 65 multiplies the second target motor torque $T_{m2}{}^*$ by the reciprocal ($= 1/K_{t2}$) of a second torque constant $K_{t2}$ of the rear-wheel driving motor 18. In this way, the second target motor current calculation unit 65 calculates a second target motor driving current $I_{m2}{}^*$ ($= T_{m2}{}^*/K_{t2}$) that is a target value of a motor driving current for driving the rear-wheel driving motor 18. The second target motor driving current $I_{m2}{}^*$ calculated by the second target motor current calculation unit 65 is output to the second deviation calculation unit 66.

The second deviation calculation unit 66 calculates a second current deviation $\Delta I_2$ ($= I_{m2}{}^* - I_{m2}$) between the

second target motor driving current $I_{m2}$* and the second motor driving current $I_{m2}$. The second target motor driving current $I_{m2}$* is calculated by the second target motor current calculation unit 65. The second motor driving current $I_{m2}$ is detected by the second current detection circuit 70. The second current deviation $\Delta I_2$ calculated by the second deviation calculation unit 66 is output to the second PI control unit 67. The second PI control unit 67 executes PI calculation on the second current deviation $\Delta I_2$ calculated by the second deviation calculation unit 66. Consequently, a second driving command value $X_2$ is generated. The second driving command value $X_2$ is used to adjust the second motor driving current $I_{m2}$ passing through the rear-wheel driving motor 18, to the second target motor driving current $I_{m2}$*. The second driving command value $X_2$ generated by the second PI control unit 67 is input into the second PWM control unit 68.

The second PWM control unit 68 generates a PWM control signal with a duty ratio corresponding to the second driving command value $X_2$ generated by the second PI control unit 67, and supplies the PWM control signal to the second inverter 5B. Consequently, the rear-wheel driving motor 18 is supplied with electric power corresponding to the second driving command value $X_2$. The second deviation calculation unit 66 and the second PI control unit 67 constitute a current feedback control unit. Through the operation of the current feedback control unit, the second motor driving current $I_{m2}$ passing through the rear-wheel driving motor 18 is controlled so as to approach the second target motor driving current $I_{m2}$* calculated by the second target motor current calculation unit 65.

Then, the drive control of the rear-wheel driving motor 18 is executed based on an actual second motor torque $T_{m2}$ (= $T_{iwm2}$) corresponding to the second target motor torque $T_{m2}$* (= $T_{iwm2}$*). Consequently, drive control of the rear wheel 4 is executed based on an actual second wheel torque $T_{iwm2}$ (= $T_{m2}$) corresponding to the second target wheel torque $T_{iwm2}$* (= $T_{m2}$*). As described above, the ECU 7 executes the drive control (feedback control) of the front-wheel driving motor 15 such that the first motor torque $T_{m1}$ (= $T_{iwm1}/(i \times \eta)$) becomes substantially equal to the first target motor torque $T_{m1}$* (= $T_{iwm1}$*/$(i \times \eta)$) calculated based on the first target wheel torque $T_{iwm1}$* and the torque amplification factor $\alpha$ (= $i \times \eta$) of the speed reducer 16. Consequently, the drive control of the front wheel 3 is executed based on the first wheel torque $T_{iwm1}$ (= $(i \times \eta) \times T_{m1}$) that is substantially equal to the first target wheel torque $T_{iwm1}$* (= $(i \times \eta) \times T_{m1}$*) and in which the torque amplification factor $\alpha$ (= $i \times \eta$) of the speed reducer 16 is reflected.

The ECU 7 executes the drive control (feedback control) of the rear-wheel driving motor 18 such that the second motor torque $T_{m2}$ (= $T_{iwm2}$) becomes substantially equal to the second target motor torque $T_{m2}$* (= $T_{iwm2}$*) calculated based on the second target wheel torque $T_{iwm2}$*. Consequently, the drive control of the rear wheel 4 is executed based on the second wheel torque $T_{iwm2}$ (= $T_{m2}$) that is substantially equal to the second target wheel torque $T_{iwm2}$* (= $T_{m2}$*).

In FIG. 11 and FIG. 12, the ECU 7 may be considered to execute the drive control of the front-wheel driving motor 15 and the rear-wheel driving motor 18 so as to satisfy Relational Expression (16) that is a relational expression based on the speed reduction ratio i, the first target wheel torque $T_{iwm1}$*, the first target motor torque $T_{m1}$*, the second target wheel torque $T_{iwm2}$*, and the second target motor torque $T_{m2}$*. More specifically, the ECU 7 may be considered to execute the drive control of the front-wheel driving motor 15 and the rear-wheel driving motor 18 so as to satisfy Relational Expression (17) that is a relational expression based on the torque amplification factor $\alpha$ (= $i \times \eta$), the first target wheel torque $T_{iwm1}$*, the first target motor torque $T_{m1}$*, the second target wheel torque $T_{iwm2}$*, and the second target motor torque $T_{m2}$*.

$$(T_{m1}{}^* \times i)/T_{iwm1}{}^* > T_{m2}{}^*/T_{iwm2}{}^* \qquad (16)$$

$$(T_{m1}{}^* \times \alpha)/T_{iwm1}{}^* > T_{m2}{}^*/T_{iwm2}{}^* \qquad (17)$$

As described above, in the vehicle 1 according to the present embodiment, the efficiency characteristic of the front-wheel driving motor 15 after speed reduction and the efficiency characteristic of the rear-wheel driving motor 18 are different from each other. Thus, in the present embodiment, it is possible to execute torque distribution for increasing the total efficiency $\eta_P$ of the power system in a wider rotation speed range and a wider torque range, than in a case where both the front wheels 3 and the rear wheels 4 are driven directly only by motors. In the vehicle 1 according to the present embodiment, the rear wheels 4 are not provided with the speed reducers 16, and accordingly the efficiency of the rear wheels 4 can be made higher than that in the case where both the front wheels 3 and the rear wheels 4 are provided with the speed reducers 16. Thus, it is possible to increase the total efficiency $\eta_P$ of the power system that drives the wheels, in various traveling conditions.

In the vehicle 1 according to the present embodiment, the range of torque (0 N·m to 300 N·m) that can be generated by the front-wheel driving motor 15 after speed reduction is set substantially identical to the range of torque (0 N·m to 300 N·m) that can be generated by the rear-wheel driving motor 18. With this configuration, there is no torque range in which only one of the front wheel 3 driven by the front-wheel driving motor 15 and the rear wheel 4 driven by the rear-wheel driving motor 18 is non-rotatable. Thus, the flexibility of torque distribution is high, and the efficiency of torque distribution is also high.

In the vehicle 1 according to the present embodiment, the clutch 17 is disposed between the front wheel 3 and the speed reducer 16. With this configuration, when torque distribution is executed such that the driving force is generated only by the rear-wheel driving motors 18 while the vehicle 1 is traveling, disengaging the clutches 17 makes it possible to prevent the driving force from being transmitted to the speed reducers 16 and the front-wheel driving motors 15 via the front wheels 3 that are rotated as the vehicle 1 travels. This enables reduction in an energy loss.

In the vehicle 1 according to the present embodiment, the diameter $\varphi_1$ of the second motor shaft 57 of the rear-wheel driving motor 18 is set larger than the diameter $\varphi_2$ of the first motor shaft 36 of the front-wheel driving motor 15. In the present embodiment, the rear-wheel driving motor 18 is a high-torque and low-rotation-speed motor that rotates at a rotation speed lower than that of the front-wheel driving motor 15 and that can generate a torque higher than that generated by the front-wheel driving motor 15. Thus, a stress applied to the second motor shaft 57 (the rear-wheel axle 51) coupled to the rear-wheel driving motor 18, which is a high-torque motor, is higher than a stress applied to the first motor shaft 36 coupled to the front-wheel driving motor 15, which is a low-torque motor. In view of this, the strength of the second motor shaft 57 is increased by setting the diameter $\varphi_1$ of the second motor shaft 57 of the rear-wheel driving motor 18 larger than the diameter $\varphi_2$ of the first motor shaft 36 of the front-wheel driving motor 15. This enables the rotational driving force to be appropriately transmitted from the rear-wheel driving motors 18 to the rear wheels 4.

In the vehicle 1 according to the present embodiment, the drive control (feedback control) of the front-wheel driving motor 15 is executed such that the first motor torque $T_{m1}$ ($= T_{iwm1}/(i \times \eta)$) is substantially equal to the first target motor torque $T_{m1}^*$ ($= T_{iwm1}^*/(i \times \eta)$) calculated based on the first target wheel torque $T_{iwm1}^*$ and the torque amplification factor $\alpha$ ($= i \times \eta$) of the speed reducer 16. The drive control of the front wheel 3 is executed based on the first wheel torque $T_{iwm}$ ($= (i \times \eta) \times T_{m1}$) that is substantially equal to the first target wheel torque $T_{iwm1}^*$ ($= (i \times \eta) \times T_{m1}^*$). In other words, the front wheel 3 is driven by the first motor torque $T_{m1}$($= T_{iwm1}/(i/(i \times \eta))$) in which the speed reduction ratio i of the speed reducer 16 (more specifically, the torque amplification factor $\alpha$ of the speed reducer 16) is reflected. Thus, it is possible to avoid a shortage with respect to the torque required to be output from the front wheels 3, thus effectively enhancing the total efficiency $\eta_P$ of the power system.

On the other hand, in the vehicle 1 according to the present embodiment, the drive control (feedback control) of the rear-wheel driving motor 18 is executed such that the second motor torque $T_{m2}$ ($= T_{iwm2}$) is substantially equal to the second target motor torque $T_{m2}^*$ ($= T_{iwm2}^*$) calculated based on the second target wheel torque $T_{iwm2}^*$. The drive control of the rear wheel 4 is executed based on the second wheel torque $T_{iwm2}$ ($= i \times \eta) \times T_{m2}$) that is substantially equal to the second target wheel torque $T_{iwm2}^*$ ($= T_{m2}^*$). Consequently, the rear wheels 4 can be driven based on the appropriate torque with neither deficiency nor excess.

While one embodiment of the invention has been described, the invention may be implemented in various other embodiments. For example, the above-described embodiment may be modified such that the rear wheels 4 may be provided with the speed reducers 16 instead of providing the front wheels 3 with the speed reducers 16. In this configuration, each rear-wheel driving motor 18 is a high-rotation-speed motor that can rotate at a rotation speed higher than that of the front-wheel driving motor 15, or is a low-torque motor that generates a torque lower than that generated by the front-wheel driving motor 15. In this configuration, the clutch 17 may be provided between the rear-wheel driving motor 18 (the speed reducer 16) and the rear wheel 4. In this case, the clutch 17 need not be provided in the front-wheel driving motor 15 that is not provided with the speed reducer 16.

In the above-described embodiment, the front-wheel driving motor 15 need not be provided in the front wheel 3 (the wheel 13). The front-wheel driving motor 15 may be partially or entirely provided outside the wheel 13. Similarly, the rear-wheel driving motor 18 need not be provided in the rear wheel 4 (the wheel 13). The rear-wheel driving motor 18 may be partially or entirely provided outside the wheel 13.

In the above-described embodiment, the front wheels 3 (the front right wheel $3_{FR}$ and the front left wheel $3_{FL}$) may be driven by one front-wheel driving motor 15, and the rear wheels 4 (the rear right wheel $4_{RR}$ and the rear left wheel $4_{RL}$) may be driven by one rear-wheel driving motor 18. In the above-described embodiment, the rear-wheel driving motor 18 may be an inner rotor motor in which the second rotor 55 is provided radially inward of the second stator 54.

In the above-described embodiment, the torque (driving force) distribution while the vehicle 1 is accelerating or traveling at a constant speed has bee described. However, the invention may be applied to the torque (regenerative force) distribution while the vehicle 1 is decelerating. That is, the invention may be applied to a case where the braking force distribution for the front-wheel driving motors 15 and the rear-wheel driving motors 18, with which the regenerative energy is maximized, is determined. In the above-described embodiment, the speed reduction ratio i of the speed reducer 16 may be set according to Relational Expression (18) using the maximum torque $T_f$ of the front-wheel driving motor 15 and the maximum torque $T_b$ of the rear-wheel driving motor 18.

$$i = n \times (T_b/T_f), n > 0 \qquad (18)$$

In Relational Expression (18), when the maximum torque $T_f$ of the front-wheel driving motor 15 is "30N·m" and the maximum torque $T_b$ of the rear-wheel driving motor 18 is "300N·m", the speed reduction ratio i of the speed reducer 16 is preferably "5 to 20". This makes it possible to reduce a deviation between the torque range of the front-wheel driving motor 15 after speed reduction and the torque range of the rear-wheel driving motor 18. In Relational Expression (18), instead of the maximum torques $T_f$, $T_b$, other torque parameters of motors, such as a rated torque and a starting torque, may be used

In the above-described embodiment, the speed reduction ratio i of the speed reducer 16 may be set according to Relational Expression (19) using the no-load rotation speed $N_f$ of the front-wheel driving motor 15 and the no-load rotation speed $N_b$ of the rear-wheel driving motor 18.

$$i = m \times (N_f/N_b), \; m > 0 \qquad (19)$$

In Relational Expression (19), when the no-load rotation speed $N_f$ of the front-wheel driving motor 15 is "10000 rpm" and the no-load rotation speed $N_b$ of the rear-wheel driving motor 18 is "1000 rpm", the speed reduction ratio i of the speed reducer 16 is preferably "5 to 20". This makes it possible to reduce a deviation between the rotation speed range of the front-wheel driving motor 15 after speed reduction and the rotation speed range of the rear-wheel driving motor 18. In Relational Expression (19), instead of the no-load rotation speeds $N_f$, $N_b$, other rotation speed parameters of motors, such as a rated rotation speed (rated speed) and a synchronous rotation speed (synchronous speed), may be used.

In the above-described embodiment, the speed reduction ratio i of the speed reducer 16 may be a value that satisfies both Relational Expression (18) and Relational Expression (19). In the above-described embodiment, the maximum torque $T_{fr}$ of the front-wheel driving motor 15 after speed reduction and the maximum torque $T_b$ of the rear-wheel driving motor 18 need not be equal to each other. In the above-described embodiment, instead of the front-wheel driving motor 15 and the rear-wheel driving motor 18, other alternating-current (AC) motors, such as induction motors, may be used.

In the above-described embodiment, the characteristics regarding the rotation speed, torque, and efficiency of the front-wheel driving motor 15, the speed reducer 16, and the rear-wheel driving motor 18 are not limited to the values in the above-described embodiment, and may be modified as needed. In the above-described embodiment, the inverter 5, the first current detection circuit 69, and the second current detection circuit 70 may be incorporated in the ECU 7.

Other various design changes may be made within the scope of the invention described in the appended claims.

**Claims**

1. A vehicle comprising:

   a pair of right and left first wheels and a pair of right and left second wheels;
   a first motor configured to rotationally drive each of the first wheels, the first motor having a first motor characteristic;
   a second motor configured to rotationally drive each of the second wheels, the second motor having a second motor characteristic that is different from the first motor characteristic;
   a speed reducer configured to amplify a torque generated by the first motor and to transmit the amplified torque to the first wheels;
   a total target wheel torque calculation unit configured to calculate a total target wheel torque that is a target value of a total wheel torque of all the wheels;
   a target wheel torque calculation unit configured to calculate a first target wheel torque that is a target value of a wheel torque required to be output from each of the first wheels and a second target wheel torque that is a target value of a wheel torque required to be output from each of the second wheels, based on the total target wheel torque, the first motor characteristic, the second motor characteristic, and a characteristic of the speed reducer;
   a first target motor torque calculation unit configured to calculate a first target motor torque that is a target value of a motor torque of the first motor, based on a speed reduction ratio of the speed reducer and the first target wheel torque;
   a second target motor torque calculation unit configured to calculate a second target motor torque that is a target value of a motor torque of the second motor, based on the second target wheel torque; and
   a motor driving control unit configured to execute drive control of the first motor based on the first target motor torque, and to execute drive control of the second motor based on the second target motor torque.

2. The vehicle according to claim 1, wherein the first target motor torque calculation unit is configured to calculate the first target motor torque based on the first target motor torque and a torque amplification factor of the speed reducer, the torque amplification factor being a product of the speed reduction ratio of the speed reducer and a forward efficiency of the speed reducer.

3. The vehicle according to claim 1 or 2, wherein the second motor is a low-rotation-speed and high-torque motor configured to rotate at a rotation speed lower than a rotation speed of the first motor and configured to generate a torque higher than a torque generated by the first motor.

4. The vehicle according to any one of claims 1 to 3, wherein:

each of the first wheels includes a first axle;
each of the second wheels includes a second axle;
the first motor includes a first motor shaft coupled to the first axle of each of the first wheels via the speed reducer;
the second motor includes a second motor shaft coupled to the second axle of each of the second wheels; and
the second motor shaft of the second motor has a larger diameter than a diameter of the first motor shaft of the first motor.

5. The vehicle according to any one of claims 1 to 4, wherein
the speed reducer is a planetary gear mechanism including:

a sun gear configured to be rotationally driven by the first motor;
a ring gear provided around the sun gear;
planet gears provided between the sun gear and the ring gear; and
a carrier configured to support the planet gears, the carrier being coupled to each of the first wheels.

# FIG.1

# FIG.2

3FR(3)

# F I G . 3

4RR(4)

# *F I G . 4*

# *F I G . 5*

# *FIG.6*

# *FIG.7*

# FIG.8

# FIG.9

# F I G . 10A

# F I G . 10B

# F I G . 10C

FIG.11

# $FIG.12$

START

CALCULATE TOTAL TARGET
WHEEL TORQUE $T_{iwm}*$ — S1

SET TARGET VEHICLE
OPERATION POINT $\Omega*(V, T_{iwm}*)$ — S2

CALCULATE FIRST TORQUE
DISTRIBUTION RATIO $R_1$
CALCULATE SECOND TORQUE
DISTRIBUTION RATIO $R_2$ — S3

CALCULATE FIRST TARGET
WHEEL TORQUE $T_{iwm1}*$
CALCULATE SECOND TARGET
WHEEL TORQUE $T_{iwm2}*$ — S4

CALCULATE FIRST TARGET
MOTOR TORQUE $T_{m1}*$
CALCULATE SECOND TARGET
MOTOR TORQUE $T_{m2}*$ — S5

END

Europäisches
Patentamt

European
Patent Office

Office européen
des brevets

**EUROPEAN SEARCH REPORT**

Application Number

EP 17 15 8697

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 769 874 A2 (JTEKT CORP [JP]) 27 August 2014 (2014-08-27) | 1-4 | INV. B60L15/20 |
| Y | * paragraphs [0011] - [0016], [0039] - [0049], [0088], [0109] - [0132] * | 5 | B60W30/188 B60W10/08 B60K7/00 |
| Y | EP 2 962 886 A2 (KANZAKI KOKYUKOKI MFG CO LTD [JP]) 6 January 2016 (2016-01-06) * paragraphs [0050] - [0052]; figures * | 5 | B60W30/045 B60L11/18 B60L15/36 |
| X | JP 2000 324621 A (NISSAN MOTOR) 24 November 2000 (2000-11-24) * abstract * * paragraphs [0017], [0020] * | 1-4 | |
| X | EP 0 622 264 A2 (HITACHI LTD [JP]) 2 November 1994 (1994-11-02) * page 3, line 34 - page 4, line 19 * | 1-4 | |
| X | DE 10 2010 062227 A1 (BOSCH GMBH ROBERT [DE]) 31 May 2012 (2012-05-31) * paragraphs [0007] - [0012], [0036], [0037] * | 1-4 | TECHNICAL FIELDS SEARCHED (IPC) |
| X | US 2009/152030 A1 (PALATOV DENNIS [US]) 18 June 2009 (2009-06-18) * paragraph [0017] * | 1-4 | B60W B60L B60K |
| A | US 2015/112535 A1 (OTA TAKASHI [JP]) 23 April 2015 (2015-04-23) * paragraphs [0009] - [0012], [0033] - [0035] * | 1-5 | |
| A | US 2015/251541 A1 (DRAKO DEAN [US] ET AL) 10 September 2015 (2015-09-10) * paragraphs [0054], [0068], [0069], [0073] - [0076] * | 1-5 | |

-/--

The present search report has been drawn up for all claims

| Place of search | Date of completion of the search | Examiner |
|---|---|---|
| Munich | 18 July 2017 | Nielles, Daniel |

EPO FORM 1503 03.82 (P04C01)

Europäisches
Patentamt

European
Patent Office

Office européen
des brevets

**EUROPEAN SEARCH REPORT**

Application Number

EP 17 15 8697

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | KR 2013 0008356 A (HYUNDAI MOBIS CO LTD [KR]) 22 January 2013 (2013-01-22) * figures * ----- | 1-5 | |

TECHNICAL FIELDS
SEARCHED      (IPC)

The present search report has been drawn up for all claims

| Place of search | Date of completion of the search | Examiner |
|---|---|---|
| Munich | 18 July 2017 | Nielles, Daniel |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**ANNEX TO THE EUROPEAN SEARCH REPORT
ON EUROPEAN PATENT APPLICATION NO.**

EP 17 15 8697

This annex lists the patent family members relating to the patent documents cited in the above-mentioned European search report.
The members are as contained in the European Patent Office EDP file on
The European Patent Office is in no way liable for these particulars which are merely given for the purpose of information.

18-07-2017

| Patent document cited in search report | | | Publication date | Patent family member(s) | | | Publication date |
|---|---|---|---|---|---|---|---|
| EP | 2769874 | A2 | 27-08-2014 | CN | 104002669 | A | 27-08-2014 |
| | | | | EP | 2769874 | A2 | 27-08-2014 |
| | | | | US | 2014238766 | A1 | 28-08-2014 |
| EP | 2962886 | A2 | 06-01-2016 | EP | 2962886 | A2 | 06-01-2016 |
| | | | | EP | 3072726 | A1 | 28-09-2016 |
| | | | | JP | 2016001002 | A | 07-01-2016 |
| JP | 2000324621 | A | 24-11-2000 | JP | 3678053 | B2 | 03-08-2005 |
| | | | | JP | 2000324621 | A | 24-11-2000 |
| EP | 0622264 | A2 | 02-11-1994 | DE | 69414451 | D1 | 17-12-1998 |
| | | | | DE | 69414451 | T2 | 15-07-1999 |
| | | | | EP | 0622264 | A2 | 02-11-1994 |
| | | | | US | 5549172 | A | 27-08-1996 |
| DE | 102010062227 | A1 | 31-05-2012 | DE | 102010062227 | A1 | 31-05-2012 |
| | | | | WO | 2012072310 | A1 | 07-06-2012 |
| US | 2009152030 | A1 | 18-06-2009 | US | 2009152030 | A1 | 18-06-2009 |
| | | | | WO | 2009078955 | A2 | 25-06-2009 |
| US | 2015112535 | A1 | 23-04-2015 | CN | 104553880 | A | 29-04-2015 |
| | | | | JP | 5880518 | B2 | 09-03-2016 |
| | | | | JP | 2015080350 | A | 23-04-2015 |
| | | | | US | 2015112535 | A1 | 23-04-2015 |
| US | 2015251541 | A1 | 10-09-2015 | US | 2015251541 | A1 | 10-09-2015 |
| | | | | US | 2016090005 | A1 | 31-03-2016 |
| KR | 20130008356 | A | 22-01-2013 | CN | 102874096 | A | 16-01-2013 |
| | | | | KR | 20130008356 | A | 22-01-2013 |

EPO FORM P0459

For more details about this annex : see Official Journal of the European Patent Office, No. 12/82

**EP 3 213 957 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011188557 A